# EUROPEAN PATENT SPECIFICATION

(11) **EP 1 392 976 B1**
(45) Date of publication and mention of the grant of the patent: **29.11.2006**
(21) Application number: 02736390.2
(22) Date of filing: 04.06.2002
(51) Int. Cl.: F04B 41/02, F04B 49/02, F04B 39/16, B60T 17/00

(54) **SYSTEM FOR SUPPLY OF A PRESSURISED GAS AND METHOD FOR VERIFYING THAT A COMPRESSOR IS ACTIVE IN A SYSTEM FOR SUPPLY OF A PRESSURISED GAS**
SYSTEM ZUR ZUFÜHRUNG ENIES DRUCKGASES UND VERFAHREN ZUR ÜBERPRÜFUNG, OB EIN KOMPRESSOR IN EINEM SYSTEM ZUR ZUFÜRHUNG VON DRUCKGAS AKTIV IST
SYSTEME D'ALIMENTATION DE GAZ SOUS PRESSION ET PROCEDE DE VERIFICATION DE L'ACTIVITE D'UN COMPRESSEUR DANS UN SYSTEME D'ALIMENTATION DE GAZ SOUS PRESSION

(30) Priority: 05.06.2001 SE 0101949
(43) Date of publication of application: 03.03.2004
(73) Proprietor: VOLVO LASTVAGNAR AB, 405 08 Göteborg (SE)
(72) Inventor: BYSTEDT, Sören, S-423 47 Göteborg (SE); SABELSTRÖM, Mats, S-423 37 Billdal (SE)
(74) Representative: Ekström, Nils
(86) International application number: PCT/SE2002/001071
(87) International publication number: WO 2002/101240

(56) References cited:
- EP-A1- 0 191 150
- US-A- 3 860 363
- US-A- 4 863 355
- US-A- 5 592 754

## Description

### TECHNICAL FIELD

The present invention relates to a system for supply of compressed gas according to the preamble of Patent Claim 1, and to a method for verifying whether a compressor is operating in a system for supply of compressed gas according to the preamble of Patent Claim 5.

### PRIOR ART

Systems for supply of compressed gas generally comprise a compressor, compressed-air lines and one or more compressed-air tanks which are fed by the compressor eg. EP-A-0 191 150. The compressor is usually controlled by a first control member which is arranged to set the compressor to a first, active state when the compressor is operating, i.e. feeding compressed gas to the compressed-air tanks, and to a second, passive state when the compressor is not operating. In known designs, for example as shown in US 4 863 355, the first control member is connected to a pressure sensor connected to said tanks, the first control member setting the compressor to an active or inactive state depending on the pressure measured by the pressure sensor.

The prior art thus includes systems for controlling a compressor in a system for supply of compressed gas. Such systems lack the possibility of verifying whether or not the compressor is actually supplying the compressed-air tanks in the system. This means that knowledge of whether the compressor is or is not in working order cannot be gained from the control system since it only sends a signal on activation to the compressor and thereafter ignores whether compressed gas is being delivered to the pressure tanks or not.

### BRIEF DISCLOSURE OF THE INVENTION

The object of the invention is to make available a system for supply of compressed gas in which it is possible to verify whether a compressor is delivering or is not delivering compressed gas to pressure tanks included in the system. This object is achieved by means of a system for supply of compressed air according to the characterizing clause of Patent Claim 1. By virtue of the fact that the system comprises a second control member which is connected in signalling terms to a pressure sensor arranged in said pressure tanks and that said second control member is arranged to establish that the compressor is operating via the pressure recorded by the pressure sensor and the changes in pressure in the pressure tank, it is possible to verify whether compressed gas is being delivered to the pressure tanks. According to a preferred embodiment, this knowledge can be used to control a system for cooling of compressed air. According to a second embodiment, this knowledge can also be used to provide information on whether the compressor is in working order, by comparing control instructions from the first control member and the second control member, with function errors being found when the first control member indicates that the compressor is active and the second control member indicates that the compressor is passive, or vice versa. According to a third embodiment, this knowledge can also be used as information for preventive maintenance for replacing desiccant cartridges in air driers and/or replacing compressors.

Said objects are achieved also by a method according to the characterizing clause of Patent Claim 5.

### DESCRIPTION OF THE FIGURES

The invention will be described in greater detail below with reference to the attached figures, where
- Fig. 1: shows a diagrammatic representation of a system for supply of compressed gas,
- Fig. 2: shows a diagrammatic representation of a method for establishing whether or not a compressor in a system for supply of compressed gas is operating or not,
- Fig. 3: shows a diagrammatic representation of a system for cooling of compressed air by fan control, where a system for supply of compressed gas according to the invention is used,
- Fig. 4: shows a diagrammatic representation of a method for establishing cooling requirements, and
- Fig. 5: shows a diagrammatic representation of an alternative method for establishing cooling requirements.

### ILLUSTRATIVE EMBODIMENTS

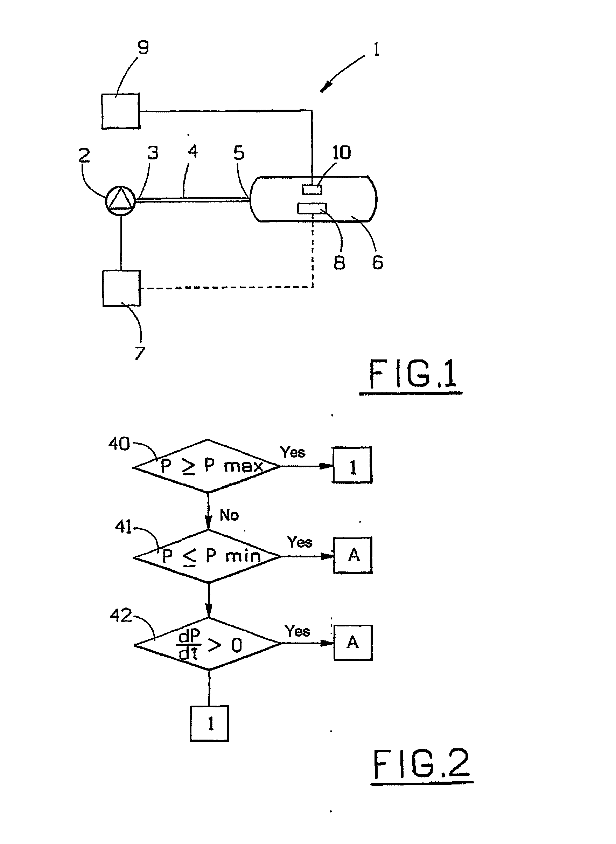

Figure 1 is a diagrammatic representation of a system for supply of compressed gas. The system comprises a compressor 2 which is of a conventional type and will therefore not be described in any more detail here. The compressor 2 has an outlet port 3 to which a gas line 4 is coupled. The compressed-air line connects said outlet port 3 to the inlet port 5 to one or more pressure tanks 6. Between said outlet port of the compressor 2 and the inlet port 5 of the pressure tank or pressure tanks 6 it is possible for one or more active components to be connected, for example an air drier. The system further comprises a first control member 7 which is arranged to control the compressor 6 in a conventional manner. The first control unit is of a conventional type and will therefore not be described in any more detail here; it can, for example, be designed as is described in any of the following documents - Japanese Utility Model Public Disclosure No. 59-14891 (1984), Japanese Patent Laid-Open No. 158392 (1984) or US Patent No. 4 863 355. As is indicated in Figure 1, the first control member can therefore be connected to a pressure sensor 8 arranged on said pressure tank or pressure tanks 6.

The first control member is thus arranged to adopt an active position when the compressor is controlled to operate whereby compressed gas is delivered to said pressure tanks, and a passive position when the compressor is controlled not to operate. The compressor 2 is thus designed on the one hand to operate in an active operational mode when the compressor is supplying the compressed-air system with compressed air, and on the other hand to be disengaged or inactive when the compressor is not supplying the system. This can be achieved in a number of ways well known to the skilled person. According to one embodiment, a valve can be opened between cylinder spaces located in the compressor, the volumetric efficiency of the compressor thus falling and the compressor in this state being unable to generate compressed air with a pressure exceeding the system pressure. According to a second embodiment, a valve connecting the cylinder spaces of the compressor to the surrounding atmosphere is opened. A third possibility is to drive the compressor via a disengageable transmission.

The system further comprises a second control member 9 which is connected in signalling terms to a pressure sensor 10 arranged in the pressure tank or pressure tanks 6. The pressure sensor 10 can consist of the pressure sensor which is used for the first control member or, alternatively, it can be a separate pressure sensor. In a preferred embodiment, a separate pressure sensor is used, which increases the reliability of the verification of whether or not there are errors in the system.

The second control member 9 is arranged to establish that the compressor is operating by means of the pressure recorded by the pressure sensor and the changes in pressure in the pressure tank, as will be described below.

The second control member, without actually generating control signals to the compressor, thus establishes that the latter is operating by virtue of a pressure sensor 10, which is mounted in the pressure tank, recording the pressure and pressure changes in the pressure tank 6. This is achieved by the fact that the second control member 9 establishes that the compressor 2 is operating when said pressure sensor 10 records a pressure in the pressure tank 6 below a first limit value; that the second control member 9 establishes that the compressor is not operating when said pressure sensor 10 records a pressure in the pressure tank 6 above a second limit value, and that the second control member 9 establishes that the compressor 2 is operating when said pressure sensor 10 records a pressure in the pressure tank 6 between said first and second limit values and the sensor 10 records that the pressure is rising, and that the second control member 9 establishes that the compressor 2 is not operating when said pressure sensor 10 records a pressure in the pressure tank 6 between said first and second limit values and the sensor records that the pressure is dropping or is constant. According to one embodiment of the invention, the control member is also arranged to establish that there is a risk of a function error if the pressure does not rise above a lower limit value and that an error exists if the pressure rises above an upper limit value.

Figure 2 is a diagrammatic representation of a method of determining whether the compressor 2 is or is not driven in an active position when the compressor is feeding air to a pressure tank 6. A first step 40 determines whether the pressure in the pressure tank is above a first limit value Pₘₐₓ. If such is the case, the compressor is inactive. A second step 41 determines if the pressure is below a second limit value Pₘᵢₙ. If such is the case, the compressor is active. In a third step 42, it is noted if the pressure in the tank is rising. If such is the case, the compressor is active. Otherwise, the compressor is inactive.

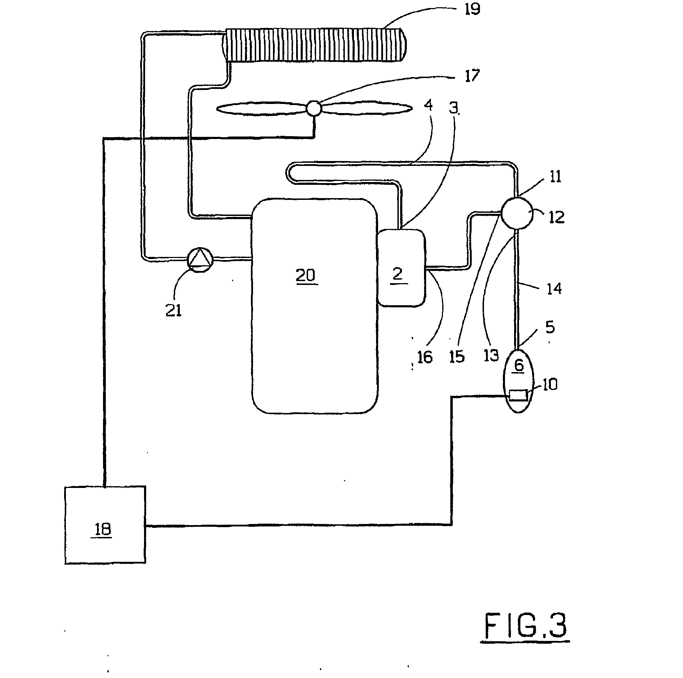

Figure 3 is a diagrammatic representation of a system for cooling of compressed air by means of fan control, with a system for supply of compressed gas according to the invention being used. The system comprises a compressor 2 which is of a conventional type and will therefore not be described in any detail here. The compressor 2 has an outlet port 3 to which a compressed-air line 4 is coupled. The compressed-air line connects said outlet port to an inlet port 11 of a first active component 12. The first active component 12 preferably consists of an air drier. The air drier 12 also has a first outlet port 13 to which a second compressed-air line 14 is connected. The second compressed-air line 14 connects the air drier 12 to an inlet port 5 of a pressure tank 6. The pressure tank 6 thereafter supplies a set of air consumers (not shown). In an alternative embodiment, the first active component consists of a circuit distribution valve, which divides the compressed-air system into two or more separate circuits. The system for supply of compressed air can also include more than one pressure tank. In the illustrative embodiment shown, the air drier 12 also has a second outlet port 15 which, via a third compressed-air line 16, is connected to the disengagement mechanism of the compressor 2 and operates as a means of communicating a pneumatic signal to said disengagement mechanism.

The system for supply of compressed air also has a controllable fan 17. The fan is controlled by a control unit 18. The control of the fan 17 is such that the fan 17 can at least be turned on and off, alternatively the control can be such that the speed of rotation of the fan can be controlled. According to one embodiment of the invention, the fan 17 is driven by a speed-regulated electric motor, but it can also be mechanically coupled via a variable transmission to a motor of another type, for example a combustion engine 20. The variable transmission can be designed in a manner well known to the skilled person; for example the speed of rotation can be controlled via a viscose clutch which connects a power outlet from the motor 20 to the axis of rotation of the fan 17.

In the illustrative embodiment shown, the fan 17 is a controllable fan which is included in the cooling system of the combustion engine 20. The cooling system comprises a set of cooling channels (not shown) arranged inside the combustion engine, inlet and outlet channels 18 which lead the coolant fluid from the combustion engine 20 to a radiator 19. The cooling system also generally comprises a pump 21 mounted in an inlet channel. The fan 17 is preferably mounted downstream of the cooler 19, which means that, if the system is mounted on a vehicle, the oncoming wind exerts a cooling effect on the radiator 19.

The compressed-air line 4, which connects the compressor 2 to the first active component 12, is placed so that it extends past the stream of air generated by the fan 17, which means that the fan is able to cool the air compressed by the compressor and thus heated before it reaches the first active component 12. The compressed-air line 4 is preferably placed in such a way that it has a continuously falling path between the outlet port 3 of the compressor and the inlet port 11 of the first active component. This means that there are no pockets in which water can gather, and in this way the formation of ice plugs is avoided in cold weather. Continuously falling path is intended to signify that, when mounted on a flat base, the perpendicular distance between the flat base and the line decreases along the path from the outlet port 3 to the inlet port 11.

The control unit 18 is further arranged to establish cooling requirements for the compressed air delivered by the compressor 2 and to generate an activation signal for the controllable fan 17 when there is a cooling requirement, said first active component being protected from thermal overload by compressed air fed from the compressor.

The cooling requirement for the compressed-air line is calculated from information concerning the operational status of the compressor 2. This information includes information on whether the compressor is active or not, active meaning that the compressor is supplying the compressed-air system with air. Information on the speed of rotation of the compressor is also used since the temperature of the compressed air rises with increased speed of rotation.

The compressor 2 is thus designed on the one hand to operate in an active operating mode in which the compressor supplies the compressed-air system with compressed air and on the other hand to be disengaged or inactive when the compressor is not supplying the system. This can be done in a number of ways well known to the skilled person. According to one embodiment, a valve can be opened between cylinder spaces located in the compressor, in which case the volumetric efficiency of the compressor decreases and the compressor in this state is unable to generate compressed air with a pressure which is above the system pressure. According to a second embodiment, a valve connecting the cylinder spaces of the compressor to the surrounding atmosphere is opened. A third possibility is to drive the compressor via a disengageable transmission.

The control unit 18 comprises a second control member 9 in accordance with what has been described above, which, without actually generating control signals to the compressor, establishes that the latter is operating by means of a pressure sensor 10, which is mounted in the pressure tank 6, recording the pressure and the changes in pressure in the pressure tank 6. This is achieved by the fact that the control unit establishes that the compressor is operating when said pressure sensor records a pressure in the pressure tank below a first limit value; that the control unit establishes that the compressor is not operating when said pressure sensor records a pressure in the pressure tank above a second limit value, and that the control unit establishes that the compressor is operating when said pressure sensor records a pressure in the pressure tank between said first and second limit values and the sensor records that the pressure is rising, and that the control unit establishes that the compressor is not operating when said pressure sensor records a pressure in the pressure tank between said first and second limit values and the sensor records that the pressure is dropping or is constant.

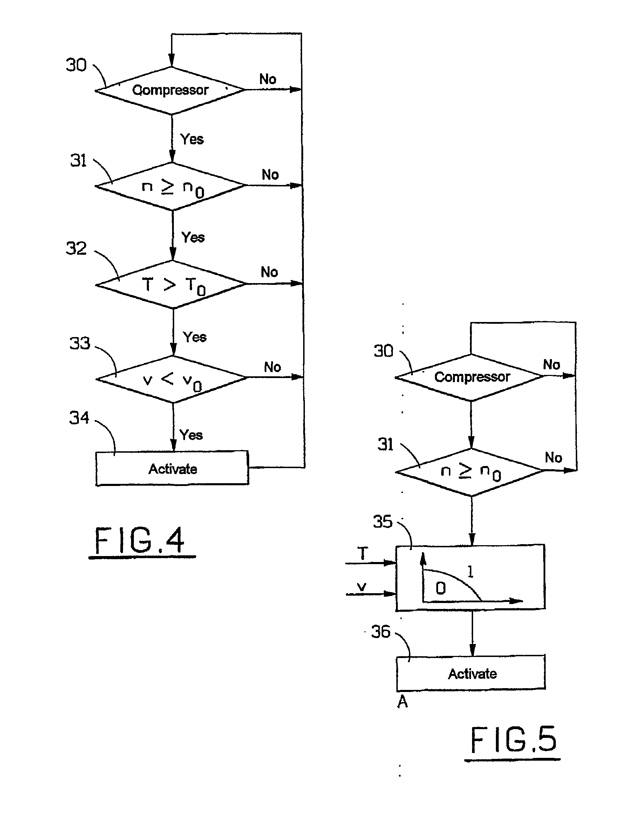

Figure 4 is a diagrammatic representation of the steps which, according to one embodiment of the invention, are gone through in order to establish whether or not there is a cooling requirement. A first method step 30 establishes whether the compressor 2 is feeding air to the system or not. If the compressor is not operating, there is no cooling requirement. A second step 31 determines whether the speed of rotation of the compressor exceeds a certain limit value. In one embodiment in which the compressor is driven by a combustion engine, the speed of rotation of the combustion engine is noted and cooling requirements may exist if the speed of rotation exceeds the idling speed of the combustion engine, which corresponds to a speed of about 700 rpm. A third step 32 determines whether the external temperature exceeds a certain limit value. A cooling requirement exists only if the external temperature exceeds this limit value. According to one embodiment, this limit value is set at 0°C. A fourth step 33 determines whether a vehicle in which the compressed-air system is mounted is being driven forwards at a speed in excess of a limit value. A cooling requirement exists only if the speed is below this limit value. According to one embodiment, the limit value is set at 50 km/h. When the checks according to steps one through to four have been carried out and the responses have been in the affirmative, the control unit, in a fifth step 34, generates an activation signal for the electrically controlled fan.

Figure 5 shows an alternative embodiment for establishing whether or not there is a cooling requirement. A first method step 30 establishes whether the compressor 2 is feeding air to the system or not. This can be established by one of the methods indicated above. If the compressor is not operating, there is no cooling requirement. A second step 31 determines whether the speed of rotation of the compressor exceeds a certain limit value. In one embodiment in which the compressor is driven by a combustion engine, the speed of rotation of the combustion engine is noted and cooling requirements may exist if the speed of rotation exceeds the idling speed of the combustion engine, which corresponds to a speed of about 700 rpm. In a third step 35, the parameters of external temperature T and vehicle speed are used as input data for a control function for the parameters of speed and external temperature. Depending on the combination of these two values, an output signal is generated which indicates whether or not there is a cooling requirement. In a fourth step 36, the control unit 18 generates an activation signal for the controllable fan if there is a cooling requirement.

The invention is not limited to the embodiments shown above and instead can be varied within the scope of the attached patent claims.

## Claims

1. System for supply of compressed gas, comprising one or more pressure tanks (6), a compressor (2) which can be controlled via first control member (7) and is arranged to supply said pressure tank or pressure tanks (6) with compressed gas, where the first control member (7) is arranged to adopt an active state when the compressor (2) is controlled to operate whereby compressed gas is delivered to said pressure tank or pressure tanks (6), and a passive state when the compressor (2) is controlled not to operate, **characterized in that** the system comprises a second control member (9) which is connected in signalling terms to a pressure sensor (10) arranged in said pressure tank or pressure tanks (6), and **in that** the second control member (9) is arranged to establish that the compressor (2) is operating by analysis of the, by the pressure sensor (10), recorded pressure and pressure changes in the pressure tank or pressure tanks (6).

2. System for supply of compressed gas according to Patent Claim 1, **characterized in that** the second control member (9) is arranged to establish that the compressor (2) is operating when the pressure sensor (10) records a pressure below a first limit value.

3. System for supply of compressed gas according to Patent Claim 1 or 2, **characterized in that** the second control member (9) is arranged to establish that the compressor (2) is not operating when the pressure sensor (10) records a pressure above a second limit value.

4. System for supply of compressed gas according to Patent Claim 2 or 3, **characterized in that** the second control member (9) is arranged to establish that the compressor (2) is operating when said pressure sensor (10) records a pressure between said first and second limit values and the sensor (10) records that the pressure is rising, and **in that** the second control member (9) is arranged to establish that the compressor (2) is not operating when the pressure sensor (10) records a pressure between said first and second limit values and the sensor (10) records that the pressure is dropping or is constant.

5. Method for verifying whether a compressor (2) is operating in a system for supply of compressed gas comprising one or more pressure tanks (6), a compressor (2) which can be controlled via first control member (7) and is arranged to supply said pressure tank or pressure tanks (6) with compressed gas, where the first control member (7) is arranged to adopt an active state when the compressor (2) is controlled to operate whereby compressed gas is delivered to said pressure tank or pressure tanks (6), and a passive state when the compressor (2) is controlled not to operate, **characterized in that** a second control member (9) which is connected in signalling terms to a pressure sensor (10) records the pressure and changes in pressure in the pressure tank or pressure tanks (6);
the second control member (9) establishing that the compressor (2) is operating when the pressure sensor (10) records a pressure below a first limit value,
the second control member (9) establishing that the compressor (2) is not operating when the pressure sensor (10) records a pressure above a second limit value,
the second control member (9) establishing that the compressor (2) is operating when the pressure sensor (10) records a pressure between said first and second limit values and the sensor (10) records that the pressure is rising, and
the second control member (9) establishing that the compressor (2) is not operating when the pressure sensor (10) records a pressure between said first and second limit values and the sensor (10) records that the pressure is dropping or is constant.

## Patentansprüche

1. System zur Bereitstellung von komprimiertem Gas, mit einem oder mehreren Drucktanks (6) und einem Kompressor (2), welcher mittels eines ersten Steuerelements (7) steuerbar ist und welcher zum Zuführen von komprimiertem Gas an den Drucktank oder die Drucktanks (6) vorgesehen ist, wobei das erste Steuerelement (7) dazu ausgebildet ist, einen aktiven Zustand, wenn der Kompressor (2) in Betrieb gesteuert ist, wodurch dem Drucktank oder den Drucktanks (6) komprimiertes Gas zuführbar ist, und einen passiven Zustand einzunehmen, wenn der Kompressor (2) nicht in Betrieb gesteuert ist,
**dadurch gekennzeichnet,**
**dass** das System ein zweites Steuerelement (9) aufweist, welches signaltechnisch mit einem Drucksensor (10), der in dem Drucktank oder den Drucktanks (6) angeordnet ist, verbunden ist, und dass das zweite Steuerelement (9) vorgesehen ist, um durch Auswerten des beziehungsweise der durch den Drucksensor (10) erfassten Drucks und Druckveränderungen in dem Drucktank oder den Drucktanks (6) festzulegen, dass der Kompressor (2) in Betrieb ist.

2. System zur Bereitstellung von komprimiertem Gas gemäß Anspruch 1, **dadurch gekennzeichnet, dass** das zweite Steuerelement (9) vorgesehen ist, um festzulegen, dass der Kompressor (2) in Betrieb ist, wenn der Drucksensor (10) einen Druck unterhalb eines ersten Grenzwertes erfasst.

3. System zur Bereitstellung von komprimiertem Gas nach Anspruch 1 oder 2, **dadurch gekennzeichnet, dass** das zweite Steuerelement (9) vorgesehen ist, um festzulegen, dass der Kompressor nicht in Betrieb ist, wenn der Drucksensor (10) einen Druck oberhalb eines zweiten Grenzwertes erfasst.

4. System zur Bereitstellung von komprimiertem Gas nach Anspruch 2 oder 3, **dadurch gekennzeichnet, dass** das zweite Steuerelement (9) vorgesehen ist, um festzulegen, dass der Kompressor (2) in Betrieb ist, wenn der Drucksensor (10) einen Druck zwischen einem ersten und einem zweiten Grenzwert erfasst und der Sensor (10) erfasst, dass der Druck ansteigt, und dass das zweite Steuerelement (9) vorgesehen ist, um festzulegen, dass der Kompressor (2) nicht in Betrieb ist, wenn der Drucksensor (10) einen Druck zwischen einem ersten und einem zweiten Grenzwert erfasst und der Sensor (10) einen abfallenden oder konstanten Druck erfasst.

5. Verfahren zum Überprüfen, ob ein Kompressor (2) in Betrieb ist in einem System zur Bereitstellung von komprimiertem Gas, mit einem oder mehreren Drucktanks (6) und einem Kompressor (2), welcher mittels eines ersten Steuerelementes (7) steuerbar ist und welcher zum Zuführen von komprimiertem Gas an den Drucktank oder die Drucktanks (6) vorgesehen ist, wobei das erste Steuerelement (7) vorgesehen ist einen aktiven Zustand, wenn der Kompressor (2) in Betrieb gesteuert ist, wobei das komprimierte Gas dem Drucktank oder den Drucktanks (6) zuführbar ist, und einen passiven Zustand einzunehmen, wenn der Kompressor (2) nicht in Betrieb gesteuert ist,
**dadurch gekennzeichnet, dass**
das zweite Steuerelement (9) signaltechnisch mit einem Drucksensor (10), welcher den Druck und Druckveränderungen in dem Drucktank oder den Drucktanks (6) erfasst, verbunden ist; das zweite Steuerelement (9) festlegt, dass der Kompressor (2) in Betrieb ist, wenn der Drucksensor (10) einen Druck unterhalb eines ersten Grenzwertes erfasst;
das zweite Steuerelement (9) festlegt, dass der Kompressor (2) nicht in Betrieb ist, wenn der Drucksensor (10) einen Druck oberhalb eines zweiten Grenzwertes erfasst;
das zweite Steuerelement (9) festlegt, dass der Kompressor (2) in Betrieb ist, wenn der Drucksensor (10) einen Druck zwischen einem ersten und einem zweiten Grenzwert erfasst und der Sensor (10) erfasst, dass der Druck steigt; und
das zweite Steuerelement (9) festlegt, dass der Kompressor (2) nicht in Betrieb ist, wenn der Drucksensor (10) einen Druck zwischen einem ersten und einem zweiten Grenzwert erfasst und der Sensor (10) einen fallenden oder konstanten Druck erfasst.

## Revendications

1. Système d'alimentation en gaz comprimé, comportant un ou plusieurs réservoirs sous pression (6), un compresseur (2) qui peut être commandé par l'intermédiaire d'un premier élément de commande (7) et qui est agencé pour alimenter ledit réservoir sous pression ou lesdits réservoirs sous pression (6) en gaz comprimé, où le premier élément de commande (7) est agencé pour adopter un état actif lorsque le compresseur (2) est commandé pour fonctionner de sorte que du gaz comprimé est délivré audit réservoir sous pression ou auxdits réservoirs sous pression (6), et un état passif lorsque le compresseur (2) est commandé pour ne pas fonctionner, **caractérisé en ce que** le système comporte un second élément de commande (9) qui est relié en terme de signalisation à un capteur de pression (10) agencé dans ledit réservoir sous pression ou dans lesdits réservoirs sous pression (6), et **en ce que** le second élément de commande (9) est agencé pour établir que le compresseur (2) fonctionne par une analyse, par le capteur de pression (10), de la pression enregistrée et des variations de pression dans le réservoir sous pression ou dans les réservoirs sous pression (6).

2. Système d'alimentation en gaz comprimé selon la revendication de brevet 1, **caractérisé en ce que** le second élément de commande (9) est agencé pour établir que le compresseur (2) fonctionne lorsque le capteur de pression (10) enregistre une pression au-dessous d'une première valeur limite.

3. Système d'alimentation en gaz comprimé selon la revendication de brevet 1 ou 2, **caractérisé en ce que** le second élément de commande (9) est agencé pour établir que le compresseur (2) ne fonctionne pas lorsque le capteur de pression (10) enregistre une pression au-dessus d'une seconde valeur limite.

4. Système d'alimentation en gaz comprimé selon la revendication de brevet 2 ou 3, **caractérisé en ce que** le second élément de commande (9) est agencé pour établir que le compresseur (2) fonctionne lorsque ledit capteur de pression (10) enregistre une pression entre lesdites première et seconde valeurs limites et que le capteur (10) enregistre que la pression augmente, et **en ce que** le second élément de commande (9) est agencé pour établir que le compresseur (2) ne fonctionne pas lorsque le capteur de pression (10) enregistre une pression entre lesdites première et seconde valeurs limites et que le capteur (10) enregistre que la pression chute ou est constante.

5. Procédé pour vérifier si un compresseur (2) fonctionne dans un système d'alimentation en gaz comprimé comportant un ou plusieurs réservoirs sous pression (6), un compresseur (2) qui peut être commandé par l'intermédiaire d'un premier élément de commande (7) et qui est agencé pour alimenter ledit réservoir sous pression ou lesdits réservoirs sous pression (6) en gaz comprimé, où le premier élément de commande (7) est agencé pour adopter un état actif lorsque le compresseur (2) est commandé pour fonctionner de sorte que du gaz comprimé est délivré audit réservoir sous pression ou auxdits réservoirs sous pression (6), et un état passif lorsque le compresseur (2) est commandé pour ne pas fonctionner, **caractérisé en ce qu'**un second élément de commande (9) qui est relié en terme de signalisation à un capteur de pression (10) enregistre la pression et des variations de pression dans le réservoir sous pression ou dans les réservoirs sous pression (6),
le second élément de commande (9) établissant que le compresseur (2) fonctionne lorsque le capteur de pression (10) enregistre une pression au-dessous d'une première valeur limite,
le second élément de commande (9) établissant que le compresseur (2) ne fonctionne pas lorsque le capteur de pression (10) enregistre une pression au-dessus d'une seconde valeur limite,
le second élément de commande (9) établissant que le compresseur (2) fonctionne lorsque le capteur de pression (10) enregistre une pression entre lesdites première et seconde valeurs limites et que le capteur (10) enregistre que la pression augmente, et
le second élément de commande (9) établissant que le compresseur (2) ne fonctionne pas lorsque le capteur de pression (10) enregistre une pression entre lesdites première et seconde valeurs limites et que le capteur (10) enregistre que la pression chute ou est constante.
